# EUROPEAN PATENT SPECIFICATION

(11) **EP 1 985 430 B1**
(45) Date of publication and mention of the grant of the patent: **31.10.2012**
(21) Application number: 07737326.4
(22) Date of filing: 16.02.2007
(51) Int. Cl.: B29C 43/34, B29B 11/10, B29C 31/04, B29C 43/08

(54) **APPARATUS FOR FEEDING MOLTEN RESIN MASS**
VORRICHTUNG ZUM ZUFÜHREN EINER KUNSTSTOFFSCHMELZE
APPAREIL D' ALIMENTATION DE RÉSINE FONDUE

(30) Priority: 17.02.2006 JP 2006040250; 31.03.2006 JP 2006097509; 31.03.2006 JP 2006097510; 28.04.2006 JP 2006125437
(43) Date of publication of application: 29.10.2008
(60) Divisional application: 11175653.2
(73) Proprietor: Toyo Seikan Kaisha, Ltd., Tokyo 100-8522 (JP)
(72) Inventor: ASANO, Yutaka, Yokohama-shi, Kanagawa 240-0062 (JP); HIROTA, Norihisa, Yokohama-shi, Kanagawa 240-0062 (JP); NAGAO, Jotaro, Yokohama-shi, Kanagawa 240-0062 (JP); WATANABE, Kazunobu, Yokohama-shi, Kanagawa 240-0062 (JP)
(74) Representative: Manley, Nicholas Michael
(86) International application number: PCT/JP2007/053334
(87) International publication number: WO 2007/094518

(56) References cited:
- WO-A1-03/047831
- WO-A1-2005/007378
- WO-A1-2005/102646
- JP-A- 2001 137 778
- JP-A- 2001 191 029
- JP-A- 2003 230 865
- JP-A- 2005 053 489
- JP-A- 2005 511 347
- US-A- 4 336 011
- US-A- 5 427 660
- US-B1- 6 241 935
- DATABASE WPI Week 198743 Thomson Scientific, London, GB; AN 1987-302686 XP002574185 -& JP 62 212100 A (CANON KK) 18 September 1987 (1987-09-18)

## Description

### Technical Field

The present invention relates to an apparatus for feeding a molten resin mass of a synthetic high molecular material. More specifically, the invention relates to an apparatus for feeding a molten resin mass for causing a predetermined amount of the molten resin extruded from a die head of an extruder to fall down into a female mold for compression molding.

### Background of the Invention

An injection-molding method and a compression-molding method have heretofore been widely known for producing such containers as bottles, caps and cups by using thermoplastic resins. In the compression-molding method, the molten resin extruded from a die head of an extruder is partly cut into a molten resin mass of a predetermined amount and is caused to fall down into a female mold for compression molding. Next, a male mold is pushed onto the molten resin mass in the female mold from the upper side thereof to effect the compression molding to obtain a desired formed article. To produce a bottle, first, a preform is produced by the compression molding and is subjected to the blow forming (see JP-A-2000-280248).

The present applicant has previously proposed a technology according to which a predetermined amount of a molten resin extruded from a die head of an extruder is cut into a molten resin mass, and a cylindrical transfer guide is used as means for transferring the molten resin mass into the female mold for compression molding. This technology enables the molten resin mass to fall down into the cavity of the female mold for compression molding without being even locally damaged (see JP-A-2005-343110).

WO-A-2005 102 642 discloses an apparatus for feeding resin molten mass, the apparatus comprising transfer chambers with vibration means to reduce adhesion between the resin and the transfer chamber.

### Disclosure of the Invention

According to the conventional apparatus for feeding the molten resin mass, however, the molten resin mass partly adheres onto the inner peripheral surface of the cylindrical transfer guide causing dispersion in the timing of falling into the female mold for compression molding, and improvement is urged from the standpoint of managing the production.

It is therefore an object of the present invention to provide an apparatus for feeding a molten resin mass, which is capable of cutting a predetermined amount of a molten resin extruded from a die head of an extruder into a molten resin mass and of reliably causing the molten resin mass to fall down into a female mold for compression molding from a cylindrical transfer guide that transfers the molten resin mass up to the female mold for compression molding without delay in the timing, and an apparatus therefor.

In order to achieve the above object, there is provided an apparatus for feeding a molten resin mass, having a cylindrical transfer guide which transfers the molten resin mass obtained by cutting off a predetermined amount of a molten resin extruded from a die head of an extruder to a metal mold for compression molding, wherein the transfer guide is provided with vibration-generating means for imparting vibration to the transfer guide thereby the molten resin mass is allowed to fall down from just above the metal mold from a holder into the metal mold for compression molding, the transfer guide is provided with a fixed blade and a moving blade, the fixed blade being provided with vibration-generating means, and the fixed blade and the moving blade have their upper ends constituted as portions of cones and have their inner peripheral edges formed as blade tips.

The vibration-generating means may include a fixed frame, a moving member contained in the fixed frame and is capable of being finely moved, a valve member attached to the moving member and forms an air chamber relative to the fixed frame, and a push spring for pushing the valve member onto the fixed frame.

The vibration-generating means may include an air chamber having an air feed port and an air release port, and a floatable vibrator contained in the air chamber.

The vibrator may be a cylinder or a spherical body. Further, the vibrator may be constituted by a ring or may be designed in any other suitable shape.

Further, the vibrator may be directly rotated by using a drive motor.

According to another embodiment of the invention, the vibration-generating means includes an electromagnet mounted on the fixed frame, a magnetic member provided near the magnetic pole surface of the electromagnet and fixed on the side of the moving member, and a push spring for urging the moving member in a direction in which it separates away from the magnetic pole surface.

The vibration-generating means can be constituted by piezoelectric elements provided on the side of the fixed frame and on the side of the moving member facing each other.

The apparatus for feeding a molten resin mass according to a further embodiment of the invention may further comprise:
a turntable that rotates; and
a female mold for molding that reciprocates between a position where the molten resin extruded from the die head of the extruder is cut and a position of compression-forming by a male mold rod of the metal mold for forming along a radial line of the turntable;
and wherein:
   the transfer guide is arranged just over the female mold and is capable of cutting a portion of the molten resin.

The female mold for forming may be placed on a slide plate that slides on a guide rail laid along the radial line of the turntable.

The molten resin mass transfer guide may comprise a fixed blade of nearly a semicircular shape and a moving blade of a semicircular shape that can be opened and closed being coupled to the fixed blade by a hinge.

The molten resin transfer guide may be placed just over the female mold for molding but just under the die head.

A guide throat may be arranged between the transfer guide and the female mold for molding.

According to the apparatus for feeding the molten resin mass of the present invention, the molten resin mass does not adhere to the inner peripheral surface of the container chamber of the transfer guide, the molten resin mass can be fallen down into the female mold for compression forming in a short period of time and smoothly, and the production can be easily managed maintaining stability without dispersion in the falling time.

In an embodiment of controlling the temperature of the high-pressure gas to assume a predetermined temperature, it is allowed to relax the distortion at the time of cutting and molding and to improve the appearance of the molten resin mass. Further, when the high-pressure gas is cooled, stickiness of the molten resin mass can be lowered and handling property can be improved at the time of conveyance.

### Brief Description of the Drawings

Fig. 1 is a plan view illustrating a compression-molding machine to which the present invention is applied;
Fig. 2 is a plan view illustrating a transfer guide in an open state;
Fig. 3 is a plan view illustrating the transfer guide in a closed state;
Fig. 4 is a view illustrating a state where the molten resin mass is cut by the transfer guide;
Fig. 5 is a view illustrating the transfer guide after the cutting;
Fig. 6 is a side view of an embodiment illustrating the principle of the present invention;
Fig. 7 is a vertical sectional view illustrating air reservoir-type vibration-generating means in a state where the pressure is elevating;
Fig. 8 is a vertical sectional view illustrating air reservoir-type vibration-generating means in a state where the pressure is released;
Fig. 9 is a side sectional view illustrating an embodiment which uses a weight;
Fig. 10 is a vertical sectional view illustrating an example of using weight-type vibration-generating means;
Fig. 11 is a side sectional view illustrating an example of using transverse vibration-type vibration-generating means;
Fig. 12 is a side sectional view illustrating a state where a molten resin mass is falling down just after it is cut;
Fig. 13 is a transverse sectional view illustrating an example of using vibration-generating means based on a ring;
Fig. 14 is a vertical sectional view illustrating vibration-generating means based on an electromagnetic solenoid;
Fig. 15 is a side view illustrating a state where the electromagnetic solenoid is in the attracted state;
Fig. 16 is a side view illustrating an example of using piezoelectric elements;
Fig. 17 is a plan view illustrating the transfer guide after the cutting has been finished, which is outside the scope of the invention;
Fig. 18 is a vertical sectional view illustrating a method of compression molding, which is outside the scope of the invention;
Fig. 19 is a vertical sectional view of another method of compression molding, which is outside the scope of the invention;
Fig. 20 is a vertical sectional view illustrating a method of reducing the pressure in the cavity of the female mold in the compression-molding metal mold, which is outside the scope of the invention;
Fig. 21 is a vertical sectional view illustrating an example of application to a metal mold for forming a wide-mouth perform, which is outside the scope of the invention;
Fig. 22 is a vertical sectional view illustrating an arrangement for reducing the pressure in the female mold in the compression-molding metal mold, which is outside the scope of the invention;
Fig. 23 is a vertical sectional view illustrating the transfer guide and a gas nozzle head;
Fig. 24 is a vertical sectional view illustrating an embodiment of the gas nozzle head;
Fig. 25 is a front view of the gas nozzle head;
Fig. 26 is a front view of the gas nozzle head according to another arrangement, which is outside the scope of the invention;
Fig. 27 is a front view of the gas nozzle head according to a further arrangement, which is outside the scope of the invention;
Fig. 28 is a front view of the gas nozzle head according to a still further arrangement, which is outside the scope of the invention;
Fig. 29 is a vertical sectional view illustrating an arrangement of the gas nozzle head, which is outside the scope of the invention;
Fig. 30 is a vertical sectional view of a rotary head, which is outside the scope of the invention;
Fig. 31 is a front view of the rotary head;
Fig. 32 is a vertical sectional view of a rotary connector, which is outside the scope of the invention;
Fig. 33 is a plan view illustrating a compression-forming machine and an apparatus for feeding a molten resin mass according to a further embodiment of the present invention;
Fig. 34 is a side view of the above molding machine;
Fig. 35 is a plan view of a cutter in an opened state; and
Fig. 36 is a plan view of the cutter in the closed state.

### Best Mode for Carrying Out the Invention

An embodiment of the apparatus for feeding a molten resin mass according to the invention will now be described with reference to the drawings.

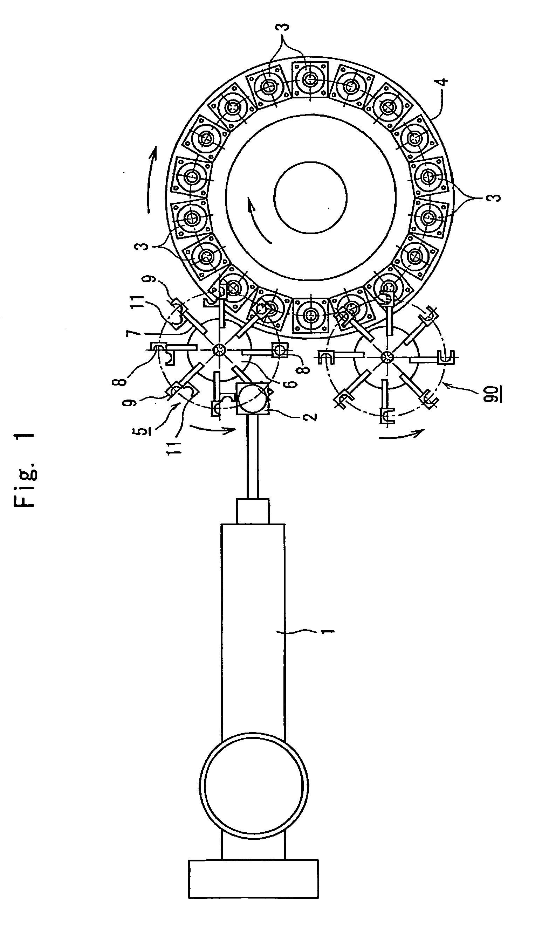

Fig. 1 is a plan view of a single-layer rotary compression-molding apparatus, wherein reference numeral 1 denotes an extruder. The extruder 1 incorporates a screw, and extrudes a molten thermoplastic resin such as propylene or polyethylene terephthalate downward from a die head 2. In this embodiment, the invention is applied to the single-layer compression-molding apparatus. Not being limited thereto only, however, the invention can be further applied to a multi-layer molten resin compression-molding apparatus, too.

Reference numeral 3 denotes lower female molds in the rotary compression-molding metal mold. Many female molds 3 for compression molding are arranged along the circumference on a turntable 4 maintaining an equal distance.

Between the extruder 1 and the turntable 4, there is provided a rotary cutter device 5 for cutting a predetermined amount of the molten resin extruded from the die head 2 of the extruder 1 into a molten resin mass, and for falling the molten resin mass down into the female mold 3 for compression molding. The cutter device 5 has a disk-like hub 6, and arms 7 are radially extending from the hub 6 maintaining an equal distance in the circumferential direction. A transfer guide 8 which constitutes a major portion of the invention is attached to an end of each arm 7. In Fig. 1, reference numeral 90 denotes a take-out device for discharging the preforms that are compression-formed to a next step.

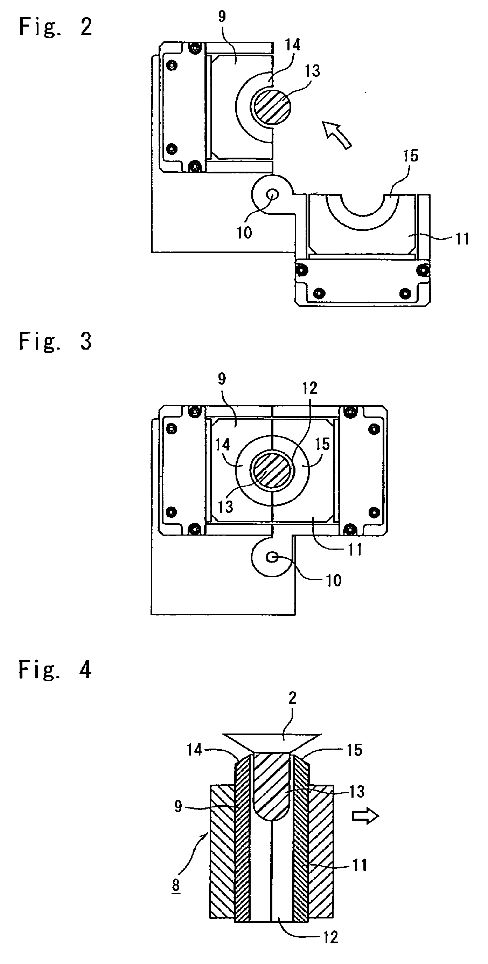

Referring to Figs. 2 and 3, the transfer guide 8 is constituted by a fixed transfer guide 9 and a moving holder 11 pivotally attached to the fixed transfer guide 9 so as to be opened and closed about a hinge shaft 10. When the moving holder 11 is closed to the fixed transfer guide 9 as is obvious from Fig. 3, a cylindrical container chamber 12 is formed between the two, and a molten resin mass 13 that is cut is contained in the container chamber 12. Further, a fixed blade 14 and a moving blade 15 are integrally formed at the upper ends of the fixed transfer guide 9 and of the moving holder 11 to cut the molten resin into a predetermined amount.

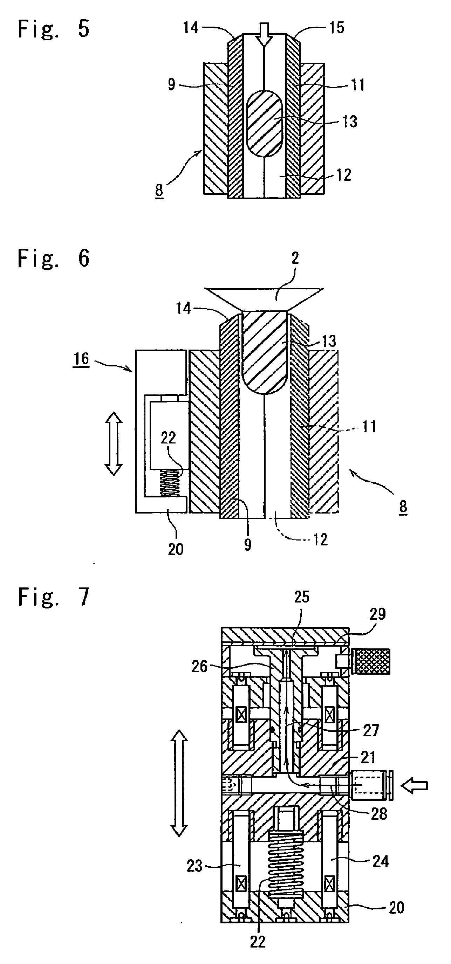

Fig. 4 is a view illustrating a state where the molten resin extruded from the die head 2 is just going to be cut by the fixed blade 14 at the upper edge of the fixed transfer guide 9 and by the moving blade 15 at the upper edge of the moving holder 11. As is obvious in Fig. 5, the molten resin mass 13 after cut falls down through the container chamber 12 of the transfer guide 8 into the female mold 3 for compression molding arranged just under the transfer guide 8.

Fig. 6 illustrates the fundamental principle of the apparatus for feeding a molten resin mass according to the present invention, wherein vibration-generating means generally designated at 16 is mounted on the fixed transfer guide 9 that constitutes the transfer guide to impart fine vibration to the transfer guide 8.

The vibration-generating means 16 can be realized in a variety of embodiments which will now be described.

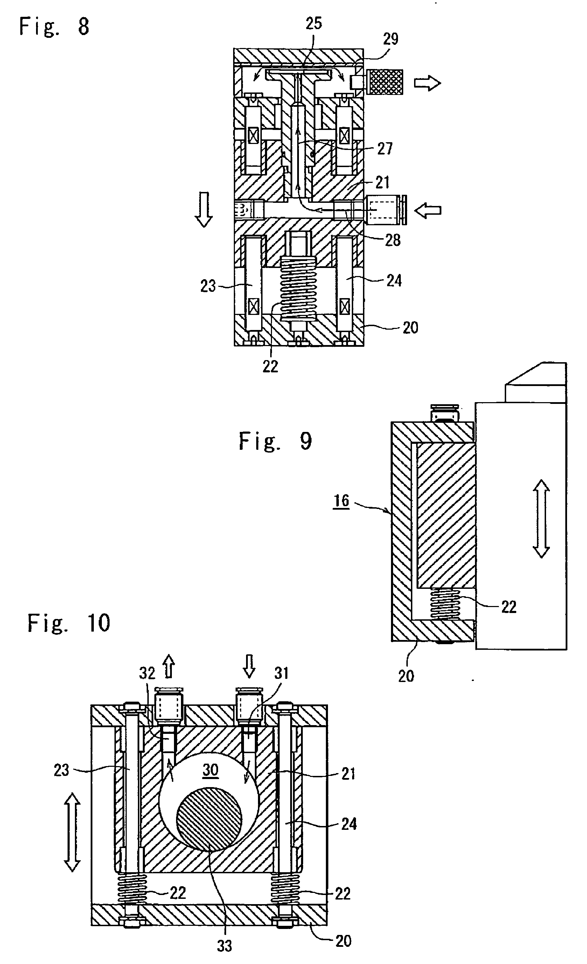

Figs. 7 and 8 illustrate an example of the air reservoir-type vibration-generating means. In Fig. 7, reference numeral 20 denotes a fixed frame, and a moving member 21 is elastically suspended on the fixed frame 20 via a push spring 22. The moving member 21 moves up and down being guided by a pair of guide shafts 23 and 24. The moving member 21 incorporates a valve member 26 that forms a valve chamber 25, and a valve passage 27 of the valve member 26 is communicated with an air feed port 28. The upper end surface of the valve member 26 comes in contact with a valve seat 29 provided on the side of the fixed frame 20 to thereby form the valve chamber 25 in cooperation therewith. In this embodiment, the compressed air is fed into the valve chamber 25 from the air feed port 28 through the valve passage 27. If the pressure in the valve chamber 25 becomes greater than a predetermined value, the push spring 22 is compressed and the valve member 26 slightly descends as shown in Fig. 8. Therefore, the air in the valve chamber 25 is released, whereby the pressure decreases and the valve member returns due to the spring force of the push spring 22. Repetition of this operation gives vibration to the transfer guide 8.

Figs. 9 and 10 illustrate another embodiment of the vibration-generating means using a weight.

In this embodiment, the moving member 21 moves up and down relative to the fixed frame 20 along the guide shafts 23 and 24, and an air chamber 30 is formed in the moving member 21, the air chamber 30 being communicated with an air feed port 31 and an air release port 32. Further, a weight 33 which is a vibrator is incorporated in the air chamber 30. The weight 33 is a cylindrical member but may assume any other suitable form such as a spherical body or a ring.

In this embodiment, the compressed air is introduced into the air chamber 30 from the air feed port 31 to act upon the weight 33 so that the weight 33 rotates in a manner that the center of gravity and the center of rotation of the weight varies, and is released from the air release port 32. During this moment, the weight 33 gives impact to the movable transfer guide 21 to vibrate it. As a result, vibration is imparted to the transfer guide 8.

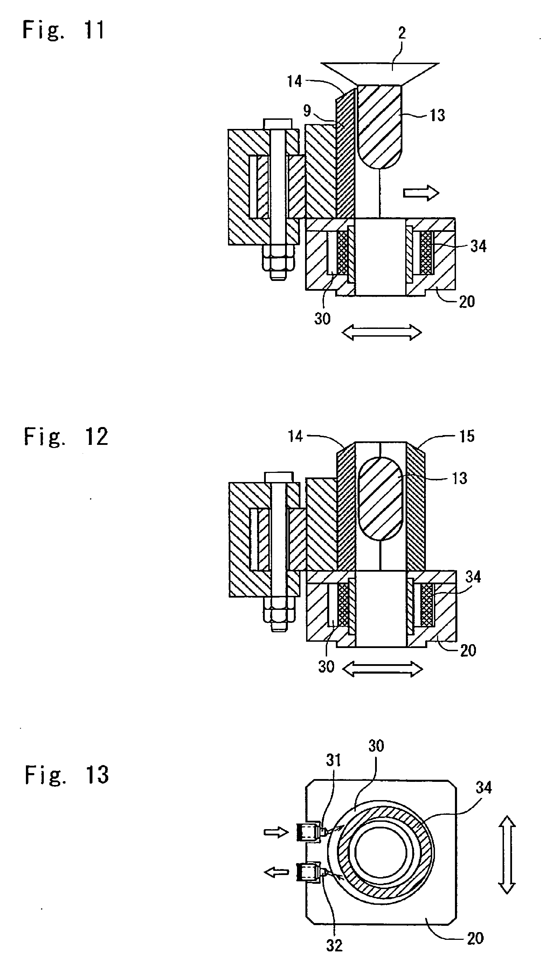

In an embodiment shown in Figs. 11, 12 and 13, a ring-like weight is used instead of the short cylindrical weight 33. That is, the air chamber 30 is formed on the inside of the fixed frame 20, and a ring 34 is incorporated in the air chamber 30.

In this embodiment, the compressed air is fed from the air feed port 31 and is released from the air release port 32. During this moment, the compressed air acts on the ring 34 to rotate the ring 34. The ring 34 that rotates produces a vibratory force to impart vibration to the transfer guide 8.

In the above embodiment, the weight 33 rotates in the air chamber 30 due to the action of the air pressure of the compressed air. The weight 33, however, can be directly driven and rotated by a drive motor.

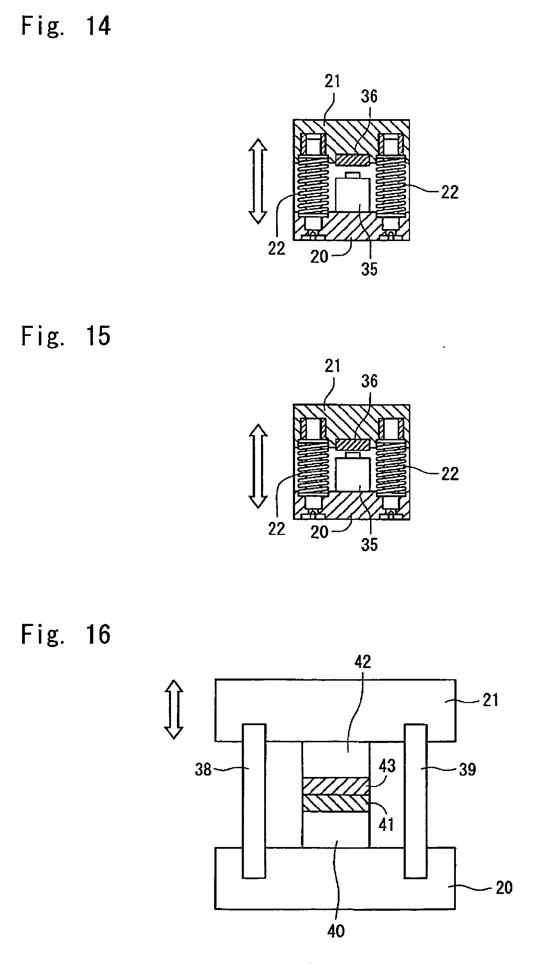

Figs. 14 and 15 illustrate an embodiment of an electromagnetic solenoid wherein a moving member 21 is elastically suspended by the fixed frame 20 via push springs 22 and 22. Further, an electromagnetic solenoid 35 is provided on the fixed frame 20, and a magnetic member 36 is mounted on the side of the moving member 21 close to the magnetic pole surface of the electromagnetic solenoid 35. In this embodiment, when an electric current is supplied to the electromagnetic solenoid 35 to energize it, the attraction and repelling occurs repetitively relative to the magnetic member 36, imparting vibration to the moving member 21 and, therefore, imparting vibration to the transfer guide 8.

Fig. 16 illustrates an embodiment of using piezoelectric elements as vibration-generating means, wherein the fixed frame 20 and the moving member 21 are coupled together by using a pair of coupling members 38 and 39. A piezoelectric element 41 is provided on the side of the fixed frame 20 via a member 40 and a piezoelectric element 43 is provided on the side of the moving member 21 via a member 42.

According to this embodiment, vibration occurs if an electric current is supplied to the piezoelectric elements 41 and 43; i.e., vibration is imparted to the moving member 21 via the members 40 and 42 and, as a result, the transfer guide 8 is vibrated.

According to the present invention constituted as described above, vibration is imparted to the transfer guide 8 from the vibration-generating means, a predetermined amount of the molten resin extruded from the die head 2 is cut into a molten resin mass and is caused to fall down into the female mold for compression forming at a stable timing without adhering to the inner peripheral surfaces of the container chamber 12 of the transfer guide 8.

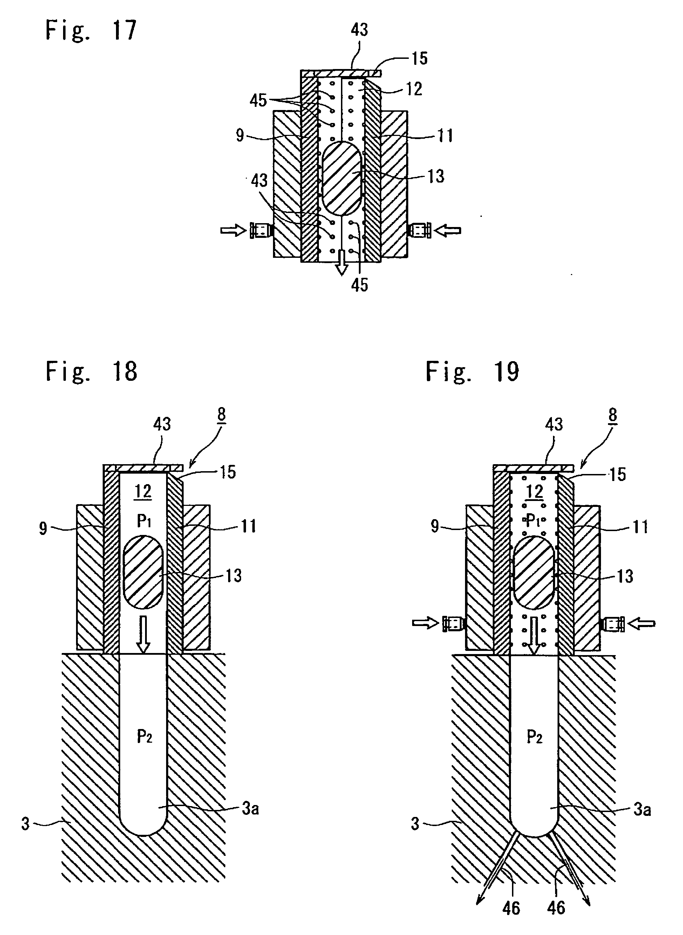

Next, described below with reference to Fig. 17 is a method of feeding a molten resin mass, which is outside the scope of the present invention, by utilizing the pressure differential.

According to this method, an opening/closing lid 43 is attached to the top surface of the fixed transfer guide 9, and a container chamber 12 which is closed at its upper end and is opened as its lower side is formed in the transfer guide 8 in a manner to control the pressure in the container chamber 12.

Further, a number of fine air holes 45, 45, ---, 45 are perforated in the fixed transfer guide 9 and in the moving holder 11, the air holes 45, 45, ---, 45 being connected to a source of the compressed air that is not shown, and the compressed air is injected into the container chamber 12.

Next, a method of compression molding, but which is outside the scope of the invention, will be described with reference to Fig. 18.

When the moving holder 11 is closed to the fixed transfer guide 9 that constitutes the transfer guide 8, the method so works that the pressure is P1 in the container chamber 12 formed between the above two. When the pressure in the female mold 3 for compression molding is set to be P2, the method so works that the inner pressure P1 becomes greater than the inner pressure P2, i.e., so as to satisfy the condition P1 > P2.

By using the pressure-imparting unit as described above, a pressure differential is produced between the upper side and the lower side of the molten resin mass 13. Therefore, the molten resin mass 13 falling into the container chamber 12 of the transfer guide 8 is allowed to fall down reliably into the female mold 3 for compression molding within short periods of time without dispersion in the timing.

According to the arrangement shown in Fig. 19, further, the pressure in the female mold 3 for molding has been reduced being evacuated through evacuation passages 46, 46 perforated in the bottom portion. According to this arrangement, the relationship P1 > P2 can be reliably and easily set and, besides, the molten resin mass 13 can be fallen down into the female mold 3 without at all adhered on the inner peripheral walls of the fixed transfer guide 9 and the moving holder 11.

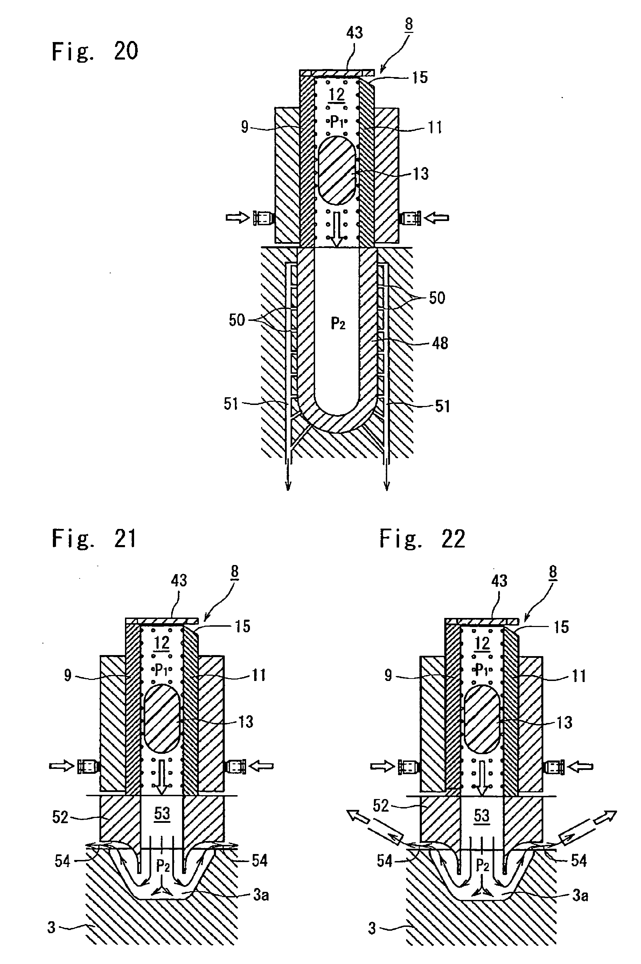

Fig. 20 illustrates an arrangement in which an inner metal mold 50 of a porous material which is a sintered member is incorporated on the inside of the female mold 3 for compression forming, and the outer circumference thereof is communicated with evacuation passages 50 and 51 communicated with a source of evacuation.

Fig. 21 illustrates an arrangement which is applied to a metal mold for forming a wide-mouth preform, and an intermediate guide member 52 is arranged between the female mold 3 for compression molding and the transfer guide 8. The intermediate guide member 52 has an intermediate passage 53 of a diameter which is the same as that of the container chamber 12 of the transfer guide 8, the passage 53 communicating with the female mold 3 for compression molding and being evacuated through evacuation passages 54 as shown in Fig. 22. According to this arrangement, the pressure P2 in the cavity 3a of the female mold 3 for forming a wide-mouth preform is set to be P1 > P2 relative to the pressure P1 in the container chamber 12 of the transfer guide 8, and the molten resin mass 13 is caused to fall down into the female mold at a stable timing.

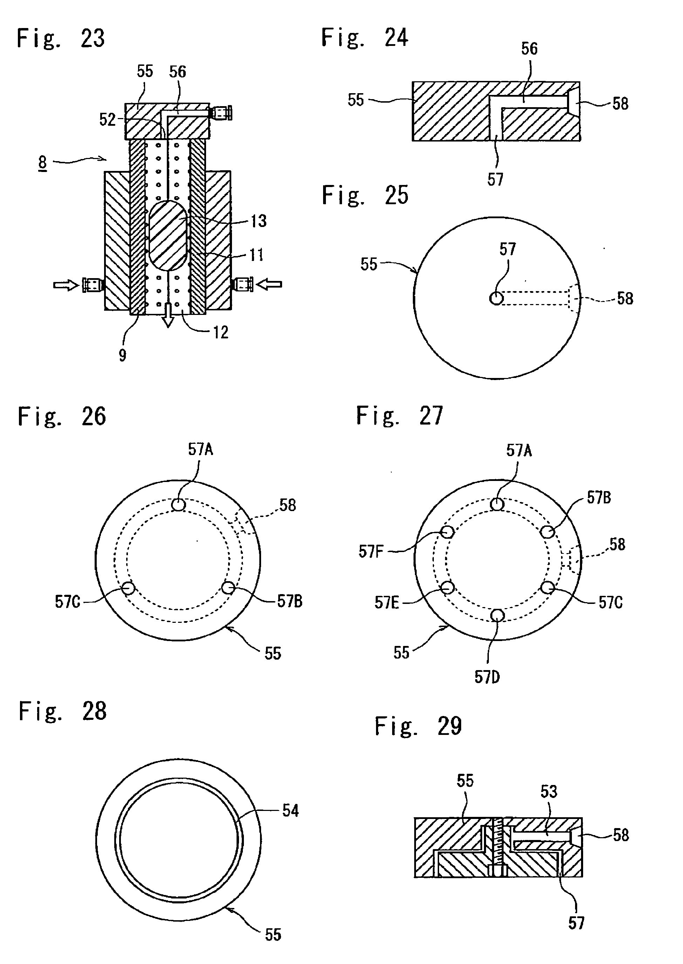

According to the arrangement shown in Fig. 23, furthermore, a gas nozzle head 55 is provided on the top surface of the transfer guide 8 and, as will be described later, a high-pressure gas is injected through the injection port from the upper region of the container chamber 12 toward the lower molten resin mass 13. As the high-pressure gas, there can be preferably used an inert gas such as a nitrogen gas or the compressed air. Further, the temperature of the high-pressure gas can be arbitrarily controlled.

In order to blow the high-pressure gas into the container chamber 12 of the transfer guide 8, a nozzle 56 is formed in the gas nozzle head 55 as will be obvious from Fig. 24, the outlet side thereof serving as an injection port 57 that is opened in the upper region of the container chamber 14 while an air feed port 58 is formed on the inlet side.

The air feed port 58 is connected to a source of the compressed air that is not shown.

According to an arrangement shown in Fig. 25, the injection port 57 is a circular hole that is opened on the center line of the gas nozzle head 55.

An arrangement shown in Fig. 26 has three circular injection ports 57A, 57B and 57C perforated maintaining a phase difference of 120 degrees in the circumferential direction.

Further, an arrangement shown in Fig. 27 has six circular injection ports 57A, 57B, ---, 57F perforated maintaining a phase difference of 60 degrees in the circumferential direction.

In an arrangement shown in Figs. 28 and 29, further, the injection port 57 is formed as an annular groove. In this arrangement, the high-pressure gas can be blown in a circular shape into the container chamber 12 of the transfer guide 8.

According to the above-mentioned arrangements, a high-pressure gas is injected through the injection port 57 into the container chamber 12 of the transfer guide 8, and acts onto the molten resin mass 13 so as to positively push the molten resin mass 13 down to reliably fall into the female mold.

In all of these arrangements, the high-pressure gas is injected straight into the container chamber 12 from the injection port 57 in the gas nozzle head 55. Here, it is also possible to remove irregularity in the high-pressure gas stream in the container chamber 12 by imparting a swirling motion to the high-pressure gas injected into the container chamber 12.

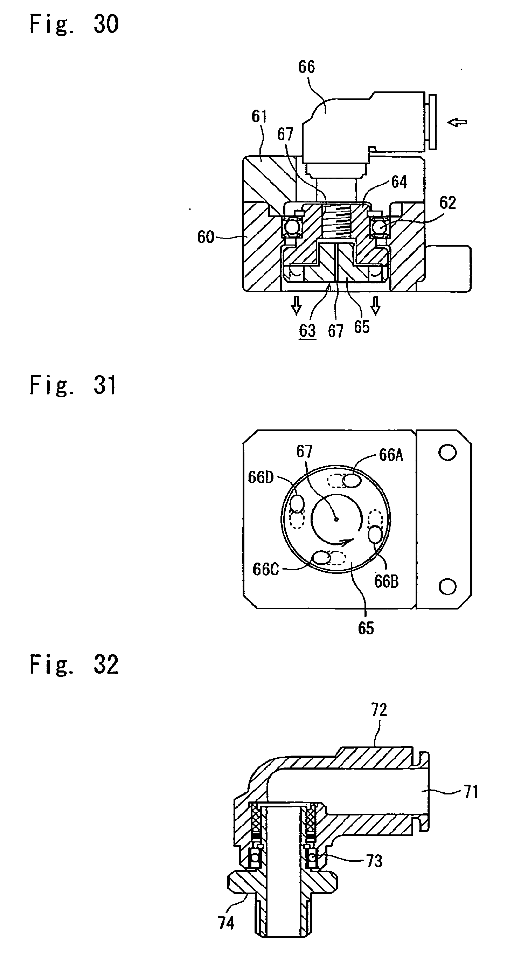

Next, described below with reference to Figs. 30 to 32 is an arrangement for imparting a swirling motion to the high-pressure gas.

In Fig. 30, reference numeral 60 denotes a fixed housing which is attached to a gas nozzle head 61 integrally therewith. A rotary head 63 is supported in the fixed housing 60 via a ball bearing 62 so as to rotate. The rotary head 63 is constituted by a retainer member 64 and a nozzle member 65, the retainer member 64 being coupled by thread to a rotary connector 66. That is, an internally threaded hole 67 is formed in the center of the retainer member 64, and is coupled by thread to an externally threaded portion of the rotary connector 66.

Further, the nozzle member 65 is attached to the retainer member 64 by a screw. An air hole 68 may be perforated in the center thereof. As is obvious from Fig. 31, further, four nozzles 66A, 66B, 66C and 66D are perforated maintaining an equal distance in the circumferential direction. The axes of the nozzle holes 66A to 66D are intersecting the center axis of rotation of the rotary head 63 at a predetermined angle. An air passage 67 is formed between the retainer member 64 and the nozzle member 65 to introduce the high-pressure gas to the nozzles 66A to 66D.

As closely illustrated in Fig. 32, further, the rotary connector 66 is constituted by a fixed member 72 having an air feed port 71 connected to the source of the compressed air and a member 74 that rotates relative to the fixed member 72 via a ball bearing 73.

According to the arrangement constituted as described above, the high-pressure gas fed into the container chamber 12 of the transfer guide 8 from the nozzles of the gas nozzle head 61 acts onto the upper surface of the molten resin mass 13 so as to reliably fall down into the female mold for forming.

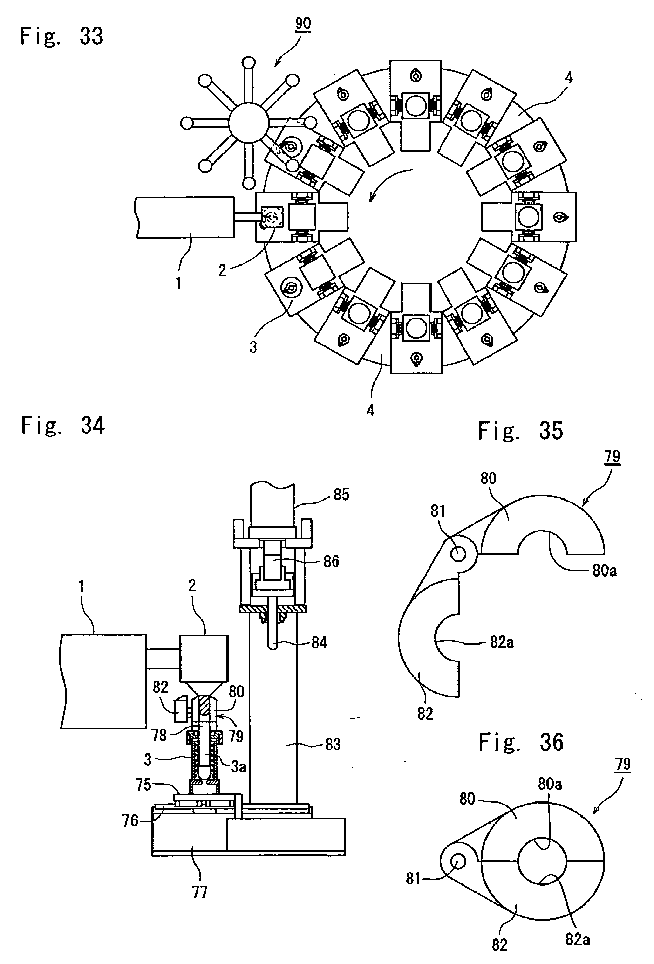

The above arrangement has dealt with a case which was applied to the cutter device 5 of the rotary type. Not being limited thereto only, however, the invention can be further applied to a cutter device of the reciprocal type as shown in Fig. 33.

In Fig. 33, reference numeral 4 denotes a turntable. Twelve female molds 3, 3, ---, 3 for molding are provided on the outer cirumferential region of the turntable 4 maintaining an equal pitch in the circumferential direction. Further, an extruder 1 is installed at a station for feeding the molten resin like the one shown in Fig. 1 to extrude a molten resin of a thermoplastic resin such as polypropylene or polyethylene terephthalate downward from the die head 2.

Unlike that of the embodiment shown in Fig. 1, however, the female mold 3 for forming is allowed to reciprocally move between the cutting position just under the die head 2 and the forming position by the male mold along the radial line of the turntable 4. For this purpose, the female mold 3 for formation is placed on a slide plate 75. The slide plate 75 is mounted a guide rail 76 which is fixed on to a bed plate 77 along a radial line. Further, a cylindrical guide throat 78 is installed on the female mold 3 so as to be communicated with the female mold 3 for molding.

A transfer guide 79 is provided on the guide throat 78. As will be obvious from Figs. 35 and 36, the transfer guide 79 is constituted by a fixed blade 80 of a semicircular shape and a moving blade 82 of a semicircular shape pivotally attached thereto via a hinge 81.

The fixed blade 80 and the moving blade 82 have their upper ends that are constituted as portions of cones and have their inner peripheral edges formed as blade tips 80a and 82a.

In Fig. 34, further, a support column 83 is vertically erected on the bed plate 77, and a male mold 84 of the forming metal mold is mounted thereon. The male mold 84 is moved up and down by a hydraulic cylinder device 85 via a piston rod 86. According to the invention, vibration-generating means is provided for fixed blade 80 that constitutes the transfer guide.

## Claims

1. An apparatus for feeding a molten resin mass (13), having a cylindrical transfer guide (8) which transfers the molten resin mass obtained by cutting off a predetermined amount of a molten resin extruded from a die head (2) of an extruder to a metal mold (3) for compression molding, wherein the transfer guide is provided with vibration-generating means (16) for imparting vibration to the transfer guide thereby the molten resin mass is allowed to fall down from just above the metal mold from a holder into the metal mold for compression molding, the transfer guide is provided with a fixed blade (80) and a moving blade (82), the fixed blade being provided with vibration-generating means, and the fixed blade and the moving blade have their upper ends constituted as portions of cones and have their inner peripheral edges formed as blade tips (80a, 82a).

2. The apparatus for feeding a molten resin mass according to claim 1, wherein the vibration-generating means includes a fixed frame (20) a moving member (21) contained in the fixed frame and is capable of being finely moved, a valve member (26) attached to the moving member and forms a valve chamber relative to the fixed frame, and a push spring (22) for pushing the valve member onto the fixed frame.

3. The apparatus for feeding a molten resin mass according to claim 1, wherein the vibration-generating means includes an air chamber (30) having an air feed port (31) and an air release port (32), and a floatable vibrator contained in the air chamber.

4. The apparatus for feeding a molten resin mass according to claim 3, wherein the vibrator is a cylinder (33).

5. The apparatus for feeding a molten resin mass according to claim 3, wherein the vibrator is a spherical body.

6. The apparatus for feeding a molten resin mass according to claim 3, wherein the vibrator is a ring (34).

7. The apparatus for feeding a molten resin mass according to claim 1, wherein the vibration-generating means includes a chamber, a vibrator contained in the chamber and is capable of being rotated in a deflected manner, and a drive motor for driving and rotating the vibrator.

8. The apparatus for feeding a molten resin mass according to claim 1, wherein the vibration-generating means includes an electromagnet mounted on the fixed frame, a magnetic member (36) provided near the magnetic pole surface of the electromagnet (35) and fixed on the side of the moving member, and a push spring (22) for urging the moving member in a direction in which it separates away from the magnetic pole surface.

9. The apparatus for feeding a molten resin mass according to claim 1, wherein the vibration-generating means is constituted by piezoelectric elements (41, 43) provided on the side of the fixed frame and on the side of the moving member facing each other.

10. The apparatus for feeding a molten resin mass as claimed in any of claims 1 to 9, further comprising:
a turntable (4) that rotates; and
a female mold (3) for forming that reciprocates between a position where the molten resin extruded from the die head (2) of the extruder (1) is cut and a position of compression-forming by a male mold rod of the metal mold for forming along a radial line of the turntable;
and wherein
the transfer guide (8) is arrangeable just over the female mold (3) and is capable of cutting a portion of the molten resin.

11. The apparatus for feeding a molten resin mass according to claim 10, wherein the female mold (3) for forming is placed on a slide plate (75) that slides on a guide rail (76) laid along the radial line.

12. The apparatus for feeding a molten resin mass (13) according to claim 10, wherein the molten resin mass transfer guide (8) comprises a fixed blade (80) of nearly a semicircular shape and a moving blade (82) of a semicircular shape that can be opened and closed being coupled to the fixed blade by a hinge.

13. The apparatus for feeding a molten resin mass according to claim 10, wherein the molten resin transfer guide (8) is placeable just over the female mold (3) and just under the die head (2).

14. The apparatus for feeding a molten resin mass according to claim 10, wherein a guide throat (78) is arranged between the transfer guide (8) and the female mold (3).

## Patentansprüche

1. Vorrichtung zum Zuführen einer geschmolzenen Harzmasse (13) mit einem zylindrischen Überführungsstück (8), das die durch Abschneiden einer vorherbestimmten Menge eines aus einem Werkzeugkopf (2) eines Extruders extrudierten geschmolzenen Harzes erhaltene geschmolzene Harzmasse zu einem Metallformwerkzeug (3) zum Formpressen überführt, wobei das Überführungsstück mit einem Vibrationserzeugungsmittel (16) versehen ist, um dem Überflührungsstück Vibration zu erteilen, wodurch ermöglicht wird, dass die geschmolzene Harzmasse von direkt über dem Metallformwerkzeug aus einem Halter in das Metallformwerkzeug zum Formpressen herunter fällt, wobei das Überführungsstück mit einem festen Messer (80) und einem bewegten Messer (82) versehen ist, wobei das feste Messer mit einem Vibrationserzeugungsmittel versehen ist und das obere Ende des festen Messers und des bewegten Messers als Abschnitte von Kegeln gebildet sind und ihre inneren Umfangsränder als Messerklingen (80a, 82a) ausgebildet sind.

2. Vorrichtung zum Zuführen einer geschmolzenen Harzmasse nach Anspruch 1, wobei das Vibrationserzeugungsmittel Folgendes umfasst: einen festen Rahmen (20), ein bewegtes Element (21), das in dem festen Rahmen enthalten ist und fähig ist, fein bewegt zu werden, ein Ventilelement (26), das an dem bewegten Element angebracht ist und eine Ventilkammer relativ zu dem festen Rahmen bildet, und eine Druckfeder (22) zum Drücken des Ventilelements an den festen Rahmen.

3. Vorrichtung zum Zuführen einer geschmolzenen Harzmasse nach Anspruch 1, wobei das Vibrationserzeugungsmittel eine Luftkammer (30) mit einem Luftzufuhranschluss (31) und einem Luftablassanschluss (32) und einem in der Luftkammer enthaltenen schwebfähigen Vibrator umfasst.

4. Vorrichtung zum Zuführen einer geschmolzenen Harzmasse nach Aspruch 3, wobei es sich bei dem Vibrator um einen Zylinder (33) handelt.

5. Vorrichtung zum Zuführen einer geschmolzenen Harzmasse nach Anspruch 3, wobei es sich bei dem Vibrator um einen sphärischen Körper handelt.

6. Vorrichtung zum Zuführen einer geschmolzenen Harzmasse nach Anspruch 3, wobei es sich bei dem Vibrator um einen Ring (34) handelt.

7. Vorrichtung zum Zuführen einer geschmolzenen Harzmasse nach Anspruch 1, wobei das Vibrationserzeugungsmittel Folgendes umfasst: eine Kammer, einen Vibrator, der in der Kammer enthalten ist und fähig ist, auf abgelenkte Weise gedreht zu werden, und einen Antriebsmotor zum Antreiben und Drehen des Vibrators.

8. Vorrichtung zum Zuführen einer geschmolzenen Harzmasse nach Anspruch 1, wobei das Vibrationserzeugungsmittel Folgendes umfasst: einen Elektromagneten, der an dem festen Rahmen montiert ist, ein Magnetelement (36), das nach bei der Magnetpoloberfläche des Elektromagneten (35) vorgesehen ist und an der Seite des bewegten Elements fixiert ist, und eine Druckfeder (22) zum Drängen des bewegten Elements in eine Richtung, in der es sich von der Magnetpoloberfläche entfernt.

9. Vorrichtung zum Zuführen einer geschmolzenen Harzmasse nach Anspruch 1, wobei das Vibrationserzeugungsmittel von piezoelektrischen Elementen (41, 43) gebildet ist, die einander zugewandt an der Seite des festen Rahmens und an der Seite des bewegten Elements vorgesehen sind.

10. Vorrichtung zum Zuführen einer geschmolzenen Harzmasse nach einem der Ansprüche 1 bis 9, die weiter Folgendes umfasst:
einen drehenden Drehteller (4); und
eine Matrize (3) zum Formen, die sich zwischen einer Stellung, in der das aus dem Werkzeugkopf (2) des Extruders (1) extrudierte geschmolzene Harz abgeschnitten wird, und einer Stellung des Formpressens durch eine Patrizenstange des Metallformwerkzeugs zum Formen entlang einer radialen Linie des Drehtischs hin - und herbewegt;
und wobei
das Überführungsstück (8) direkt über der Matrize (3) angeordnet werden kann und fähig ist, einen Abschnitt des geschmolzenen Harzes abzuschneiden.

11. Vorrichtung zum Zuführen einer geschmolzenen Harzmasse nach Anspruch 10, wobei die Matrize (3) zum Formen auf einer Gleitplatte (75) platziert ist, die auf einer entlang der radialen Linie verlegten Führungsschiene (76) gleitet.

12. Vorrichtung zum Zuführen einer geschmolzenen Harzmasse (13) nach Anspruch 10, wobei das Überführungsstück (8) für die geschmolzene Harzmasse ein festes Messer (80) mit nahezu halbkreisförmiger Form und ein bewegtes Messer (82) mit halbkreisförmiger Form umfasst, das geöffnet und geschlossen werden kann, da es mit einem Scharnier an das feste Messer gekoppelt ist.

13. Vorrichtung zum Zuführen einer geschmolzenen Harzmasse nach Aspruch 10, wobei das Überführungsstück (8) für das geschmolzene Harz direkt über die Matrize (3) und direkt unter den Werkzeugkopf (2) platziert werden kann.

14. Vorrichtung zum Zuführen einer geschmolzenen Harzmasse nach Anspruch 10, wobei ein Führungshals (78) zwischen dem Überfiührungsstück (8) und der Matrize (3) angeordnet ist.

## Revendications

1. Appareil d'alimentation d'une masse de résine fondue (13), comportant un guide de transfert cylindrique (8) qui transfère la masse de résine fondue obtenue en sectionnant une quantité prédéterminée d'une résine fondue extrudée d'une tête de filière (2) d'une extrudeuse et en l'amenant vers un moule métallique (3) de moulage par compression, le guide de transfert étant doté d'un moyen générateur de vibrations (16) pour conférer des vibrations au guide de transfert de telle sorte que la masse de résine fondue puisse chuter d'un emplacement situé juste au-dessus du moule métallique depuis un support jusque dans le moule métallique de moulage par compression, le guide de transfert étant doté d'une pale fixe (80) et d'une pale mobile (82), la pale fixe étant dotée d'un moyen générateur de vibrations, et la pale fixe et la pale mobile ayant des extrémités supérieures constituées sous forme de parties de cônes et ayant des bords périphériques internes formés sous forme de bouts de pales (80a, 2a).

2. Appareil d'alimentation d'une masse de résine fondue selon la revendication 1, dans lequel le moyen générateur de vibrations comporte un cadre fixe (20), un élément mobile (21) contenu dans le cadre fixe et pouvant être déplacé avec précision, un élément de valve (26) fixé à l'élément mobile et formant une chambre de valve par rapport au cadre fixe, et un ressort poussoir (22) pour pousser l'élément de valve sur le cadre fixe.

3. Appareil d'alimentation d'une masse de résine fondue selon la revendication 1, dans lequel le moyen générateur de vibrations comporte une chambre à air (30) ayant un orifice d'arrivée d'air (31) et un orifice d'échappement d'air (32) et un élément vibrant flottant contenu dans la chambre à air.

4. Appareil d'alimentation d'une masse de résine fondue selon la revendication 3, dans lequel l'élément vibrant est un cylindre (33).

5. Appareil d'alimentation d'une masse de résine fondue selon la revendication 3, dans lequel l'élément vibrant est un corps sphérique.

6. Appareil d'alimentation d'une masse de résine fondue selon la revendication 3, dans lequel l'élément vibrant est un anneau (34).

7. Appareil d'alimentation d'une masse de résine fondue selon la revendication 1, dans lequel le moyen générateur de vibrations comporte une chambre, un élément vibrant contenu dans la chambre et pouvant être tourné de façon fléchie, et un moteur d'entraînement pour entraîner et faire tourner l'élément vibrant.

8. Appareil d'alimentation d'une masse de résine fondue selon la revendication 1, dans lequel le moyen générateur de vibrations comporte un électroaimant monté sur le cadre fixe, un élément magnétique (36) fourni près de la surface de pôle magnétique dé l'électroaimant (35) et fixé sur le côté de l'élément mobile, et un ressort poussoir (22) pour forcer l'élément mobile dans un sens qui le sépare de la surface de pôle magnétique.

9. Appareil d'alimentation d'une masse de résine fondue selon la revendication 1, dans lequel le moyen générateur de vibrations est constitué par des éléments piézoélectriques (41, 43) fournis sur le côte du cadre fixe et sur le côté de l'élément mobile en opposition.

10. Appareil d'alimentation d'une masse de résine fondue selon l'une quelconque des revendications 1 à 9, comprenant en outre :
une table tournante (4) qui tourne ; et
un moule femelle (3) de formation qui se déplace en va et vient entre une position où la résine fondue extrudée de la tête de filière (2) de l'extrudeuse (1) est coupée et une position de formation par compression par une tige de moulage mâle du moule métallique en vue d'une formation le long d'une ligne radiale de la table tournante ;
et dans lequel
le guide de transfert (8) peut être agencé juste au-dessus du moule femelle (3) et peut couper une partie de la résine fondue.

11. Appareil d'alimentation d'une masse de résine fondue selon la revendication 10, dans lequel le moule femelle (3) de formation est placé sur une plaque coulissante (75) qui coulisse dans un rail de guidage (76) disposée le long de la ligne radiale.

12. Appareil d'alimentation d'une masse de résine fondue (13) la revendication 10, dans lequel le guide de transfert de masse de résine fondue (8) comprend une pale fixe (80) d'une forme presque semi-circulaire et une pale mobile (82) d'une forme semi-circulaire qui peut être ouverte et fermée en étant couplée à la pale fixe par une articulation.

13. Appareil d'alimentation d'une masse de résine fondue selon la revendication 10, dans lequel le guide de transfert de résine fondue (8) peut être placé juste au-dessus du moule femelle (3) et juste en dessous de la tête de filière (2).

14. Appareil d'alimentation d'une masse de résine fondue selon la revendication 10, dans lequel une gorge de guidage (78) est agencée entre le guide de transfert (8) et le moule femelle (3).
